# EUROPEAN PATENT APPLICATION

(11) **EP 1 732 015 A1**
(43) Date of publication of application: **13.12.2006**
(21) Application number: 06011711.6
(22) Date of filing: 07.06.2006
(51) Int. Cl.: G06F 17/30

(54) **A colour selector device and a method for selecting colours**

(30) Priority: 10.06.2005 IT PR20050030
(71) Applicant: Ravazzola, Luciano, 29010 Fogliani Di Alseno PC (IT)
(72) Inventor: Ravazzola, Luciano, 29010 Fogliani Di Alseno PC (IT)
(74) Representative: Gotra, Stefano

(57) **Abstract**

A colour selector device comprises means for detecting a colour of an object, with the possible association to an input identifying code, a memory containing a database relating to a plurality of reference colours, processing means operatively connected to said detecting means and to said memory to select at least one colour or an identifying code from said database, according to the colour of the object, and interfacing means for transmitting said at least one selected colour or identifying code or a representation thereof at the output from the device. A method for selecting colours automatically with processing means provides for a step of quantifying the match of the reference colours relevant to the colour of the object.

## Description

The present invention relates to a colour selector device.

The present invention further relates to a method for selecting colours.

In several industries or crafts, there is a frequent need to compare a colour with a plurality of reference colours, in order to select an object from a warehouse of available objects, said selection being based on chromatic evaluations.

Said need manifests itself, for example, in the textile industry, when accessories have to be selected (e.g. threads, buttons or zippers) in combination with a fabric. In the textile industry, for each accessory there is a plurality of elements of various colours in a warehouse; it is necessary to select the colour, among those available for a given accessory, that is best suited to the colour of the fabric whereon the accessory is to be applied.

To carry out such a selection, according to the prior art a specialised operator performs a visual comparison between the colour of a portion of the fabric to be combined and a plurality of chromatic samples contained in a catalogue or a sample set, typically constituted by a series of accessories arranged in chromatic scale on a file holder.

Said technique has some limitations. First of all, known selection methods are slow and costly, because they are entirely carried out by a human being, without the aid of automatic systems. Moreover, the outcome of the selection depends on the operator's experience and sensitivity. Moreover, the colours contained in the sample holders are subject to variations over time, by effect of the degradation of the supports whereon they are impressed. Therefore, such a selection is a non repeatable operation; in other words, if it is repeated after a time interval, in all likelihood it will yield different outcomes. Lastly, the sample holders, in themselves, do not take into account the actual situation or availability of the warehouse. Therefore, it is possible for an operator to select an accessory of a given colour according to the sample holder, and then to verify that there is no longer any element of said colour in the warehouse.

In this light, there are numerous other situations in which operators have to select colours (or objects characterised by colours) visually, with enormous time expenditure and with imprecise, non repeatable results. Such situations may occur, for example, in the interior decoration or paint industry, as well as in the field of the textile industry (take for instance the combination of linings or curtains), of the leather industries or of shoes. Therefore, the above limitations are associated to all cases in which an operator is called upon to select a colour amongst a plurality of reference colours, based on a colour that is subject to chromatic combination.

An object of the present invention is to eliminate the aforesaid drawbacks and to make available a colour selector device, that is automatic, rapid and effective.

Said object is fully achieved by the device of the present invention, which is characterised by the content of the claims set out below and in particular in that it comprises, in combination:
- means for detecting a colour of an object, with possible association to an input identifying code;
- a memory containing a database relating to a plurality of reference colours;
- processing means operatively connected to said detection means and to said memory to select at least one colour or an identifying code from said data base, according to the colour of the object;
- interfacing means for transmitting said at least one colour or a selected identifying code or a representation thereof at the output of the device.

An additional object of the present invention is to make available a method for selecting colours automatically, usable even by inexperienced operators, which may be subject to customisation by an experienced user.

Said object is fully achieved by the method of the present invention, which is characterised by the content of the claims set out below and in particular in that it comprises the following steps:
- deriving an identifying code of the colour of an object;
- comparing said identifying code with a database relating to a plurality of reference colours by processing means;
- automatically selecting at least one reference colour on the basis of said comparison.

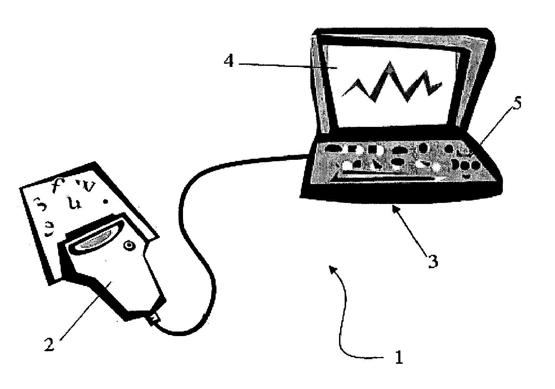

This and other characteristics shall become more readily apparent from the description that follows of a preferred embodiment, illustrated purely by way of non limiting example in the accompanying drawing table, in which the sole figure shows a functional diagram of the device of the present invention.

In the figure, the reference number 1 designates a device according to the present invention. In the illustrated embodiment, the device 1 comprises detection means 2 connected to a processor 3, constituted, in the illustrated embodiment, by a palmtop computer. Said detection means consist, in the illustrated embodiment, of an optical scan element 2, substantially known. Said element, in a preferred but not exclusive embodiment, can be gripped by a user, who operatively approaches it to an object, in the manner of a bar code reader.

The detection means 2, when applied to an object, make available to the processor 3 data about the colour of the object. Said data are constituted, for example, by an identifying code, preferably associated to a determined colorimetric reference system.

In particular, the detection means 2 are able to generate a colour image of the object in digital format. Each colour present in the image is detected and associated to a code, which is preferably, but not necessarily, of the RGB type.

The processor 3 further comprises a memory and processing means. It should be noted that an embodiment is provided in which said memory and/or said processing means are not contained in a palmtop computer, but are present on a computer accessible through a telecommunications network. Moreover, an embodiment is provided in which the detecting means 2, the memory and the processing means are contained in a single instrument.

Said memory contains data about a plurality of reference colours. For example, said colours refer to objects present in a warehouse or on a catalogue.

Note that said memory contains a database relating to a plurality of reference colours. Said database also contains, preferably, management information about said samples (e.g. the availability in stock of accessories corresponding to a given colour, or previous uses of each of the samples).

The device 1 also comprises interfacing means, for transferring input/output data from the device and/or for displaying data. In the illustrated embodiment, said interfacing means comprise a screen 4 and a keyboard 5; the interfacing means also comprise one or more ports for a connection of the device 1 to peripherals or to a telecommunications or telephone network, for the exchange of data.

The data contained in the memory can be stored through said detection means. In this case, an operator applies the detection means to a plurality of objects, subsequently storing the detected data in the memory. Alternatively, the data contained in the memory can be transmitted to the device 1 through said interfacing means, transferring them from any digital support. The data contained in the memory can advantageously be displayed in the screen 4. Note that it is possible to insert in the memory, in addition to the reference colours and/or to their identifying codes, additional information, e.g. the availability of an accessory in a warehouse.

The processing means comprise for example a known processor, associated to a program for operating it. The processing means carry out a comparison between a colour or a corresponding identifying input code, provided by the detection means 2, with the reference colours, or the related identifying code, contained in the memory. Based on said comparison, the processing means select one or more output colours or their identifying codes. Said output colours or identifying codes are then made available at the output of the device 1 through the interfacing means.

Said comparison is originally carried out automatically by the processing means, based on evaluation criteria specified by said operating program. Said evaluation criteria can advantageously be determined by an operator, through artificial intelligence system managed through the interfacing means. In this way, an operator can personalise the operation of the device 1, setting one or more personalised evaluation criteria, for said automatic selection of colours.

It should also be observed that the memory can be updated at any time, through the detection means and/or the interfacing means, to add or eliminate reference colours or to modify identifying codes.

In a preferred embodiment, the processing means operate as follows.

The digital image acquired by the detection means is subjected to a first processing step (i.e. a pre-processing step), which comprises the following steps:
- simplifying the image, by reducing the number of colours, using, for example, an algorithm that merges the colours for contiguous pixels exhibiting minimal variations (the extent of these variations constitutes a parameter that can be adjusted according to the application of the device);
- extracting identifying codes (e.g. RGB values) of the colours included in the simplified image (said identifying codes being stored in the memory).

Note that said pre-processing step advantageously enables to eliminate shadows and other types of interference from the digital image.

At the end of said pre-processing step, the processing means make available one or more identifying codes (e.g. said RGB values), corresponding to colours whose presence was detected in the object. Moreover, for each of said colours, the processing means make available a value of a quantifying parameter, representative of the presence of that colour within the simplified digital image. For example, said quantifying parameter consists of the number of pixels detected in the simplified image, for each colour (i.e. for each identifying code made available at the end of the pre-processing step) relevant to said image of the object. Therefore, said quantifying parameter is able to quantify the greater or lesser match of a colour with respect to an image, i.e. quantifying the presence of that colour in the image.

Moreover, a processing step subsequent to the pre-processing step is provided, aimed at associating said object to one or more colours (or corresponding identifying codes) present in said database (and relating to colours of corresponding samples).

Said association takes place, operatively, in the following manner, according to a preferred embodiment of the device of the present invention.

For each of said detected identifying codes, corresponding to colours whose presence was observed in the object in the pre-processing step, the processing means extract one or more identifying codes pertaining to colours contained in the database, as a function of a comparative parameter. Said comparative parameter is preferably constituted by a distance between the detected identifying codes contained in the database and a detected identifying code. In particular, said distance consists, for example, of a Euclidean norm evaluated in a colorimetric space, e.g. RGB.

In particular, for each of said detected identifying codes, all and only the identifying codes for which the value of said comparative parameter is no higher than a pre-set reference value are extracted from the database.

To each of the identifying codes extracted for each detected identifying code, the processing means associate a value of a selection parameter, as a function of the value of the comparative parameter for that given identifying code extracted (from the database) and of the value of the quantifying parameter for that given identifying code detected (from the image of the object).

Ultimately, the processing means select, among the extracted identifying codes, one or more output identifying codes, as a function of said selection parameter.

Therefore, the device 1 originally enables to select one or more colours (i.e. identifying codes of said colours, relevant to respective samples) from a database on statistical basis, i.e. as a function of a combined evaluation of quantifying and comparative parameters, calculated with respect to one or more identifying codes detected for the object.

Note that the selection of one or more colours contained in the database takes place discretely, i.e. intermediate colours (or intermediate hues) are not selected (or calculated or derived) among the colours contained in the database.

With regard to said interfacing means, it should be noted that the results made available from the processing means are made available to the user of the device 1 preferably in the following manner.

The following information is displayed on the video (or on paper or on other support):
- a list of the identifying codes selected from the database and representative of corresponding samples;
- an image of the analysed object;
- an image of each of the detected samples;
- an indication of the availability in stock of said selected samples.

The present invention also makes available a method for selecting colours. Said method comprises the following steps:
- deriving an identifying code of the colour of an object;
- comparing said identifying code with a database relating to a plurality of reference colours by processing means;
- automatically selecting at least one reference colour on the basis of said comparison.

Said method also comprises a step of constructing said database, stored in an appropriate memory. Said step of constructing the database can be carried out by an operator applying said step of deriving an identifying code of the colour of an object to a plurality of reference objects and saving the data thus obtained in the memory. Alternatively, the step of constructing the database provides for transferring the data to the memory from a digital support (e.g. a CD or an electronic key) through interfacing means which allow to input/output data into and out of the memory.

Said step of constructing the database, preferably, comprises the following:
- acquiring images of the samples to be inserted in the database, with the same device and pre-processing method described above;
- determining, for each sample, a reference colour (or a corresponding identifying code), by evaluating the image of said sample, based on a comparison parameter (e.g. in the manner described above);
- filing said codes (identifying codes) in the database, together with a reference commercial code of that sample, and with any other management information (e.g. availability of the sample in stock).

The method described herein also comprises a step of updating the database, through the detection means and/or the interfacing means.

Moreover, said method provides for a step of training said processing means, by an operator. Said training step consists, for example, of the application of artificial intelligence techniques to program the processing means.

The described method originally allows automatically to perform the selection of one or more colours, from a plurality of reference colours, on the basis of the colour of an object to be combined. Said method originally enables even an inexperienced operator to perform said selection correctly and rapidly. Moreover, the selection operated through said method is, originally, repeatable, for it is performed with electronic / computerised means. Furthermore, said method originally enables to set diversified, personalised criteria for the selection of colours, (e.g. by using artificial intelligence techniques). Said method also allows, originally, to construct databases of reference colours of objects contained in a warehouse or represented in a catalogue, said databases not being subject to degradation and being easily transferable.

The method of the present invention comprises, in a preferred embodiment, the following steps:
- acquiring a digital image of the object to be evaluated;
- simplifying said image, in a pre-processing step;
- detecting one or more identifying codes corresponding to the colours included in said image;
- extracting one or more colour identifying codes from said database, for each of said detected identifying codes;
- selecting one or more identifying codes, within the set of said extracted identifying codes, as a function of comparison and quantification parameters evaluated on the basis of said extracted identifying codes and said detected identifying codes.

Moreover, the method and the device of the present invention advantageously makes available additional functions, such as:
- saving the image of the object being evaluated in a database and representing the sample associated therewith by selection, for subsequent consultations;
- transferring to the output of the device the results of previous analyses using the interfacing means (e.g. displaying or printing);
- using the information resulting from the selection step in combination with management information stored in the database relative to the samples, e.g. to produce documentation (work orders, internal work orders, warehouse moves, etc.).

Note that the method and the device of the present invention apply, in particular, within the field of dress-making, said object being constituted mainly by a fabric and said samples (elements of the database) substantially consist of dress-making accessories.

## Claims

1. A colour selector device,
**characterised in that** it comprises, in combination:
- means (2) for detecting a colour of an object, with possible association to an input identifying code;
- a memory containing a database relating to a plurality of reference colours;
- processing means operatively connected to said detection means and to said memory to select at least one colour or an identifying code from said data base, according to the colour of the object;
- interfacing means for transmitting said at least one colour or a selected identifying code or a representation thereof at the output of the device.

2. Device as claimed in claim 1, wherein the processing means perform said selection automatically comparing said identifying input code with said reference identifying code.

3. Device as claimed in claim 1, wherein the processing means perform said comparison on the basis of quantifying and comparative parameters, suitable for evaluating the presence in the object of the colours included in the database.

4. Device as claimed in claim 1, wherein said memory contains information about elements of a warehouse associated to said reference colours.

5. Device as claimed in any of the previous claims, wherein said object consists of a fabric and said reference colours consist of colours of dress-making accessories.

6. A method for selecting colours,
**characterised in that** it comprises the following steps:
- deriving an identifying code of the colour of an object;
- comparing said identifying code with a database relating to a plurality of reference colours by processing means;
- automatically selecting at least one reference colour on the basis of said comparison.

7. Method as claimed in claim 6, wherein said step of comparing said identifying code with a database relating to a plurality of reference colours comprises the evaluation of values of a comparative parameter, calculated on the basis of said identifying code and of codes identifying said reference colours.

8. Method as claimed in claim 6, wherein the step of selecting at least one reference colour comprises the evaluation of values of a quantifying parameter, able to quantify the match of the reference colours relevant to the colour of the object.

9. Method as claimed in claim 6, comprising a step of constructing said database, by applying automatic colour detection means to a plurality of reference objects.

10. Method as claimed in claim 6, comprising a step of updating / modifying said database.
